# EUROPEAN PATENT APPLICATION

(11) **EP 4 823 100 A1**
(43) Date of publication of application: **14.10.2026**
(21) Application number: 23960904.3
(22) Date of filing: 06.12.2023
(51) Int. Cl.: H04N 21/436, H04N 21/485

(54) **DISPLAY DEVICE AND OPERATING METHOD THEREFOR**

(71) Applicant: LG Electronics Inc., Yeongdeungpo-gu Seoul 07336 (KR)
(72) Inventor: LEE, Han Su, Seoul 06772 (KR); LEE, Eun Jung, Seoul 06772 (KR); KIM, Tae Young, Seoul 06772 (KR)
(74) Representative: Vossius & Partner Patentanwälte Rechtsanwälte mbB
(86) International application number: PCT/KR2023/019984
(87) International publication number: WO 2025/121475

(57) **Abstract**

A display device and an operational method thereof are disclosed. A display device according to at least one of various embodiments of the present disclosure includes: a memory; and a processor configured to control an output of a second audio output device when a connection request of the second audio output device is received in a state in which a first audio output device is connected, wherein the processor may determine an output control method of the second audio output device according to whether the second audio output device is a same model to the first audio output device.

## Description

### Technical Field

The present disclosure relates to a display device and an operational method thereof.

### Background Art

Recently, functions of terminals have become diversified. For example, there are functions for data and voice communication, photographing and video recording through a camera, voice recording, playback of music files through a speaker system, and outputting an image or a video on a display.

Some terminals are additionally provided with an electronic game play function or perform a multimedia player function.

As such, as functions of terminals become diversified, the terminals are implemented in the form of a multimedia player having composite functions such as photographing or video recording, playback of music or video files, games, and reception of broadcasts.

### Disclosure of the Invention

### Technical Problem

The present disclosure is to provide a display device and an operational method thereof capable of appropriately controlling audio output even when at least one or more audio output devices are additionally connected to the display device in a state in which one audio output device is already connected.

### Technical Solution

A display device according to at least one of various embodiments of the present disclosure may include: a memory; and a processor configured to control an output of a second audio output device when a connection request of the second audio output device is received in a state in which a first audio output device is connected, wherein the processor may determine an output control method of the second audio output device according to whether the second audio output device is a same model to the first audio output device.

According to at least one of various embodiments of the present disclosure, when the second audio output device is a same model to the first audio output device, the processor may set a volume value of the second audio output device to the same value as a volume value of the first audio output device.

According to at least one of various embodiments of the present disclosure, the processor may control a PCM gain to be maintained despite connection of the second audio output device.

According to at least one of various embodiments of the present disclosure, when the second audio output device is not a same model to the first audio output device, the processor may determine one of a volume value control scheme of the second audio output device and a PCM gain control scheme.

According to at least one of various embodiments of the present disclosure, when the second audio output device is not a same model to the first audio output device, the processor may read a volume value corresponding to a volume value of the first audio output device from a volume table previously stored in the memory and set the read volume value as a volume value of the second audio output device.

According to at least one of various embodiments of the present disclosure, when the second audio output device is not a same model to the first audio output device, the processor may set the same or similar volume value as the volume value of the first audio output device as a volume value of the second audio output device.

According to at least one of various embodiments of the present disclosure, the processor may control a PCM gain when only the first audio output device is connected to be changed such that the same or similar volume value as the volume value of the first audio output device is set in the second audio output device.

An operational method of a display device according to at least one of various embodiments of the present disclosure may include: connecting to a first audio output device; controlling an output of the first audio output device; receiving a connection request from a second audio output device; and determining an output control method of the second audio output device according to whether the requested second audio output device is a same model to the previously connected first audio output device.

According to at least one of various embodiments of the present disclosure, when the second audio output device is a same model to the first audio output device, a volume value of the second audio output device may be set to the same value as a volume value of the first audio output device.

According to at least one of various embodiments of the present disclosure, a PCM gain may be controlled to be maintained despite connection of the second audio output device.

According to at least one of various embodiments of the present disclosure, when the second audio output device is not a same model to the first audio output device, the output control method may be determined as one of a volume value control scheme of the second audio output device and a PCM gain control scheme.

According to at least one of various embodiments of the present disclosure, when the second audio output device is not a same model to the first audio output device, a volume value corresponding to a volume value of the first audio output device may be read from a previously stored volume table and set as a volume value of the second audio output device.

According to at least one of various embodiments of the present disclosure, when the second audio output device is not a same model to the first audio output device, the same or similar volume value as the volume value of the first audio output device may be set as a volume value of the second audio output device.

According to at least one of various embodiments of the present disclosure, a PCM gain when only the first audio output device is connected may be controlled to be changed such that the same or similar volume value as the volume value of the first audio output device is set in the second audio output device.

### Advantageous Effects

According to at least one of various embodiments of the present disclosure, even when at least one or more audio output devices are additionally connected to a display device in a state in which one audio output device is already connected, inconvenience of a user can be minimized by appropriately controlling audio output, and user satisfaction can be improved thereby.

### Description of Drawings

FIG. 1 is a block diagram illustrating a configuration of a display device according to an embodiment of the present disclosure.
FIG. 2 is a block diagram illustrating a configuration of a remote control device according to an embodiment of the present disclosure.
FIG. 3 illustrates an example of an actual configuration of a remote control device according to an embodiment of the present disclosure.
FIG. 4 illustrates an example of utilizing a remote control device according to an embodiment of the present disclosure.
FIG. 5 is a diagram for explaining a landscape mode and a portrait mode of a stand-type display device according to an embodiment of the present disclosure.
FIG. 6 is a schematic diagram of an audio processing system according to an embodiment of the present disclosure.
FIGS. 7 to 9 are diagrams illustrating a method of controlling a volume of an audio output device.
FIGS. 10 to 12 are diagrams illustrating an operational method of a display device connected to audio output devices according to an embodiment of the present disclosure.
FIG. 13 is a graph illustrating a method of controlling a device volume of an audio output device in a display device according to an embodiment of the present disclosure.
FIG. 14 is a flowchart illustrating an operation between audio output devices and a display device according to an embodiment of the present disclosure.

### Best Mode

Hereinafter, embodiments related to the present disclosure will be described in greater detail with reference to the accompanying drawings. In the following description, the suffixes "module" and "unit" for components used herein are given or used interchangeably only in consideration of ease of drafting this specification, and do not have distinct meanings or roles from each other.

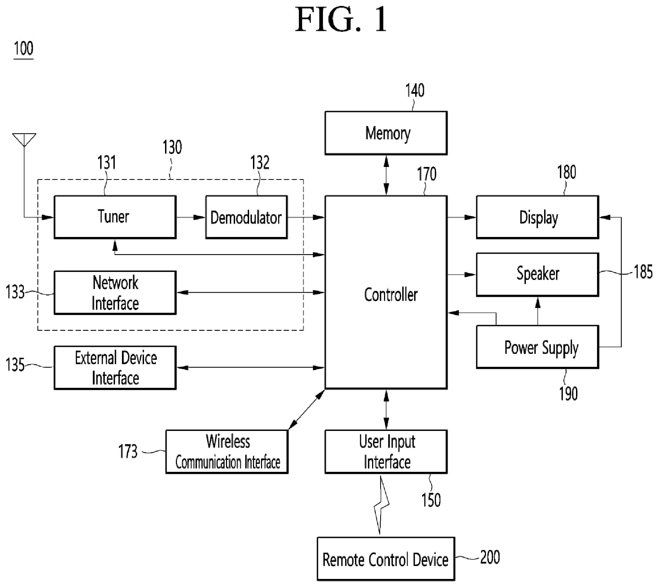

FIG. 1 is a block diagram illustrating a configuration of a display device 100 according to an embodiment of the present disclosure.

Referring to FIG. 1, the display device 100 may include a broadcast receiver 130, an external device interface 135, a memory 140, a user input interface 150, a controller 170, a wireless communication interface 173, a voice acquisition module 175, a display 180, an audio output unit 185, and a power supply circuit 190.

The broadcast receiver 130 may include a tuner 131, a demodulator 132, and a network interface 133.

The tuner 131 may tune to a specific broadcast channel according to a channel tuning command. The tuner 131 may receive a broadcast signal corresponding to the tuned specific broadcast channel.

The demodulator 132 may separate the received broadcast signal into a video signal, an audio signal, and a data signal related to a broadcast program, and may restore the separated video signal, audio signal, and data signal into forms capable of being output.

The network interface 133 may provide an interface for connecting the display device 100 to a wired or wireless network including the Internet. The network interface 133 may transmit or receive data to or from another user or another electronic device through a connected network or another network linked to the connected network.

The network interface 133 may access a predetermined web page through a connected network or another network linked to the connected network. That is, the network interface 133 may access a predetermined web page through a network and transmit or receive data to or from a corresponding server.

Further, the network interface 133 may receive content or data provided by a content provider or a network operator. That is, the network interface 133 may receive content such as a movie, advertisement, game, Video on Demand (VOD), and a broadcast signal, and information related thereto, provided by a content provider or a network operator through a network.

In addition, the network interface 133 may receive firmware update information and update files provided by a network operator and may transmit data to the Internet, a content provider, or a network operator.

The network interface 133 may receive a desired application selected from among applications openly available through a network.

The external device interface 135 may receive an application or an application list from a neighboring external device and may transfer the received application or application list to the controller 170 or the memory 140.

The external device interface 135 may provide a connection path between the display device 100 and an external device. The external device interface 135 may receive at least one of video and audio output from an external device connected to the display device 100 wirelessly or by wire and may transfer the received video and/or audio to the controller 170. The external device interface 135 may include a plurality of external input terminals. The plurality of external input terminals may include an RGB terminal, one or more High-Definition Multimedia Interface (HDMI) terminals, and a Component terminal.

An audio signal of an external device input through the external device interface 135 may be output through the display 180. An audio signal of an external device input through the external device interface 135 may be output through the audio output unit 185.

An external device connectable to the external device interface 135 may be any one of a set-top box, a Blu-ray player, a DVD player, a game console, a sound bar, a smartphone, a PC, a USB memory, and a home theater, but is not limited thereto.

In addition, a portion of content data stored in the display device 100 may be transmitted to a selected user or a selected electronic device among other users or other electronic devices previously registered in the display device 100.

The memory 140 may store programs for signal processing and control performed by the controller 170, and may store processed video, audio, or data signals.

Further, the memory 140 may temporarily store video, audio, or data signals input through the external device interface 135 or the network interface 133, and may store information regarding a predetermined image through a channel memory function.

The memory 140 may store an application or an application list input through the external device interface 135 or the network interface 133.

The display device 100 may reproduce a content file (e.g., a video file, a still image file, a music file, a document file, or an application file) stored in the memory 140 and provide the reproduced content to a user.

The user input Interface 150 may transfer a signal input by a user to the controller 170 or transfer a signal from the controller 170 to the user. For example, according to various communication methods such as Bluetooth, Ultra Wideband (UWB), ZigBee, Radio Frequency (RF) communication, or Infrared (IR) communication, the user input interface 150 may receive and process a control signal such as power on/off, channel selection, or screen setting from a remote control device 200, or may process a control signal from the controller 170 to be transmitted to the remote control device 200.

In addition, the user input interface 150 may transfer a control signal input through a local key (not shown), such as a power key, a channel key, a volume key, or a setting key, to the controller 170.

A video signal processed by the controller 170 may be input to the display 180 and displayed as an image corresponding to the video signal. In addition, the video signal processed by the controller 170 may be input to an external output device through the external device interface 135.

An audio signal processed by the controller 170 may be audio-output through the audio output unit 185. In addition, the audio signal processed by the controller 170 may be input to an external output device through the external device interface 135.

In addition, the controller 170 may control overall operations of the display device 100.

Further, the controller 170 may control the display device 100 according to a user command received through the user input interface 150 or according to an internal program, and may enable downloading of an application or an application list desired by a user into the display device 100 through a network connection.

The controller 170 may allow channel information selected by a user and the like to be output through the display 180 or the audio output unit 185 together with a processed video signal or audio signal.

Further, according to an external-device video reproduction command received through the user input interface 150, the controller 170 may allow a video signal or an audio signal from an external device input through the external device interface 135, for example, from a camera or a camcorder, to be output through the display 180 or the audio output unit 185.

Meanwhile, the controller 170 may control the display 180 to display an image. For example, the controller 170 may control a broadcast image input through the tuner 131, an external input image input through the external device interface 135, an image input through the network interface, or an image stored in the memory 140 to be displayed on the display 180. In this case, the image displayed on the display 180 may be a still image or a moving image and may be a 2D image or a 3D image.

In addition, the controller 170 may control content stored in the display device 100, received broadcast content, or externally input content to be reproduced, and the content may be in various forms such as a broadcast image, an external input image, an audio file, a still image, a connected web screen, and a document file.

The wireless communication interface 173 may perform communication with an external device through wired or wireless communication. The wireless communication interface 173 may perform short-range communication with an external device. For this purpose, the wireless communication interface 173 may support short-range communication using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless Fidelity (Wi-Fi), Wi-Fi Direct, and Wireless Universal Serial Bus (Wireless USB) technologies. The wireless communication interface 173 may support wireless communication between the display device 100 and a wireless communication system, between the display device 100 and another display device 100, or between the display device 100 and a network in which the display device 100 (or an external server) is located, through a Wireless Area Network. The Wireless Area Network may be a Wireless Personal Area Network.

Here, the other display device 100 may be a wearable device capable of exchanging data with (or interoperating with) the display device 100 according to the present disclosure, such as a smart watch, smart glass, Head Mounted Display (HMD), or a mobile terminal such as a smartphone. The wireless communication interface 173 may detect (or recognize) a communicable wearable device around the display device 100. Further, when the detected wearable device is an authenticated device authorized to communicate with the display device 100 according to the present disclosure, the controller 170 may transmit at least a portion of data processed by the display device 100 to the wearable device through the wireless communication interface 173. Accordingly, a user of the wearable device may use data processed by the display device 100 through the wearable device.

The voice acquisition module 175 may obtain audio. The voice acquisition module 175 may include at least one microphone (not shown) and may obtain audio around the display device 100 through the microphone (not shown).

The display 180 may convert a video signal, a data signal, an OSD signal, or a video signal and a data signal received from the external device interface 135, respectively, into R, G, and B signals and may generate driving signals.

Meanwhile, since the display device 100 illustrated in FIG. 1 is merely an embodiment of the present disclosure, some of the illustrated components may be integrated, added, or omitted according to specifications of an actually implemented display device 100.

That is, as necessary, two or more components may be combined into a single component, or one component may be subdivided into two or more components. Further, functions performed by the respective blocks are for explaining embodiments of the present disclosure, and specific operations or devices thereof do not limit the scope of the present disclosure.

According to another embodiment of the present disclosure, unlike the configuration illustrated in FIG. 1, the display device 100 may receive and reproduce an image through the network interface 133 or the external device interface 135 without including the tuner 131 and the demodulator 132.

For example, the display device 100 may be implemented separately as an image processing device, such as a set-top box for receiving a broadcast signal or content according to various network services, and a content playback device for reproducing content input from the image processing device.

In this case, the operational method of a display device according to embodiments of the present disclosure described below may be performed not only by the display device 100 described above with reference to FIG. 1, but also by either an image processing device such as a separate set-top box or a content playback device including the display 180 and the audio output unit 185.

The audio output unit 185 receives a voice-processed signal from the controller 170 and outputs the received signal as sound.

The power supply circuit 190 supplies power throughout the display device 100. In particular, the power supply circuit 190 may supply power to the controller 170, which may be implemented in the form of a System on Chip (SoC), the display 180 for image display, and the audio output unit 185 for audio output.

Specifically, the power supply circuit 190 may include a converter for converting AC power into DC power and a DC/DC converter for converting a level of the DC power.

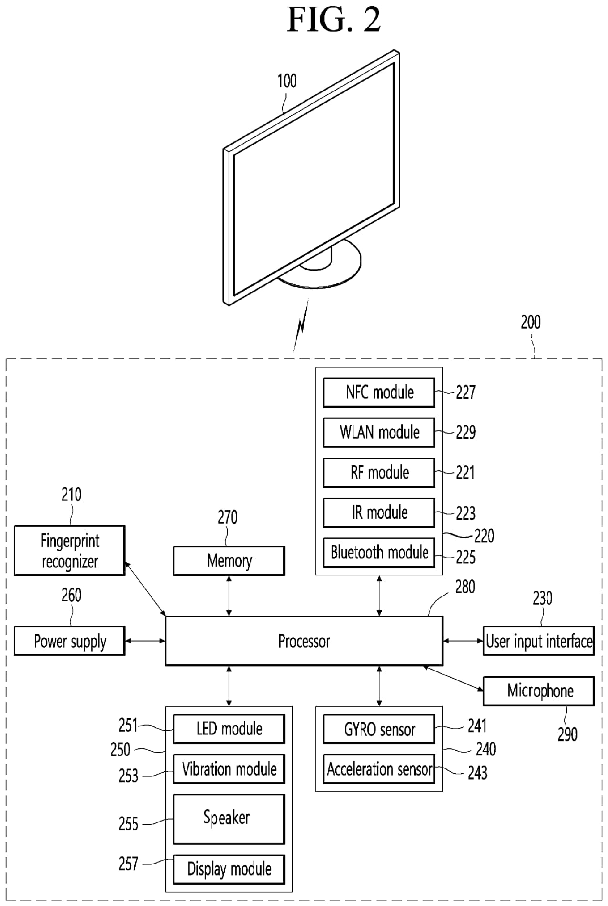

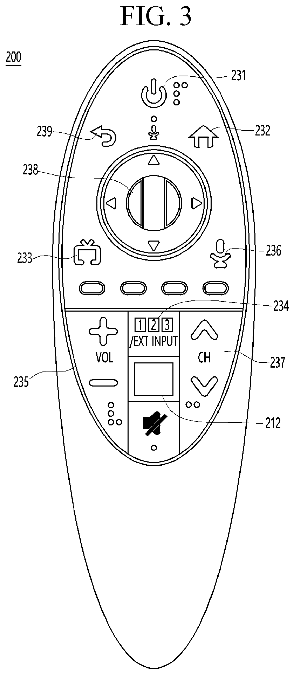

Next, a remote control device according to an embodiment of the present disclosure will be described with reference to FIGS. 2 and 3.

FIG. 2 is a block diagram of a remote control device according to an embodiment of the present disclosure, and FIG. 3 illustrates an example of an actual configuration of the Remote control device according to an embodiment of the present disclosure.

First, referring to FIG. 2, the remote control device 200 may include a fingerprint recognition unit 210, a wireless communication unit 220, a user input unit 230, a sensor unit 240, an output unit 250, a power supply unit 260, a memory 270, a controller 280, and a voice acquisition module 290.

Referring to FIG. 2, the wireless communication unit 220 transmits and receives signals to and from any one of the display devices according to the embodiments of the present disclosure described above.

The remote control device 200 may include an RF module 221 capable of transmitting and receiving signals to and from the display device 100 according to an RF communication standard, and may include an IR module 223 capable of transmitting and receiving signals to and from the display device 100 according to an IR communication standard. Further, the remote control device 200 may include a Bluetooth module 225 capable of transmitting and receiving signals to and from the display device 100 according to a Bluetooth communication standard. Further, the remote control device 200 may include an NFC Module 227 capable of transmitting and receiving signals to and from the display device 100 according to a Near Field Communication (NFC) standard and may include a WLAN module 229 capable of transmitting and receiving signals to and from the display device 100 according to a Wireless LAN (WLAN) communication standard.

Further, the remote control device 200 transmits, through the wireless communication unit 220, a signal including information regarding movement of the remote control device 200 to the display device 100.

Meanwhile, the remote control device 200 may receive a signal transmitted by the display device 100 through the RF module 221, and may transmit commands related to power on/off, channel change, volume change, and the like to the display device 100 through the IR module 223, as necessary.

The user input unit 230 may include a keypad, a button, a touch pad, or a touch screen. A user may input a command related to the display device 100 into the remote control device 200 by operating the user input unit 230. When the user input unit 230 includes a hard-key button, the user may input a command related to the display device 100 into the remote control device 200 through a push operation of the hard-key button. This will be described with reference to FIG. 3.

Referring to FIG. 3, the remote control device 200 may include a plurality of buttons. The plurality of buttons may include a fingerprint recognition button 212, a power button 231, a home button 232, a Live button 233, an external input button 234, a volume control button 235, a voice recognition button 236, a channel change button 237, an OK button 238, and a back button 239.

The fingerprint recognition button 212 may be a button for recognizing a fingerprint of a user. In an embodiment, the fingerprint recognition button 212 may support a push operation and may receive a push operation and a fingerprint recognition operation. The power button 231 may be a button for turning on/off power of the display device 100. The home button 232 may be a button for moving to a home screen of the display device 100. The Live button 233 may be a button for displaying a live broadcast program. The external input button 234 may be a button for receiving an external input connected to the display device 100. The volume control button 235 may be a button for adjusting a volume level output by the display device 100. The voice recognition button 236 may be a button for receiving and recognizing a user's voice. The channel change button 237 may be a button for receiving a broadcast signal of a specific broadcast channel. The OK button 238 may be a button for selecting a specific function, and the back button 239 may be a button for returning to a previous screen.

FIG. 2 will now be described again.

When the user input unit 230 includes a touch screen, a user may input a command related to the display device 100 into the remote control device 200 by touching a soft key on the touch screen. Further, the user input unit 230 may include various types of input devices operable by a user, such as a scroll key or a jog key, and the present embodiment does not limit the scope of the present disclosure.

The sensor unit 240 may include a gyro sensor 241 or an acceleration sensor 243, and the gyro sensor 241 may sense information regarding movement of the remote control device 200.

For example, the gyro sensor 241 may sense information regarding an operation of the remote control device 200 based on x-, y-, and z-axes, and the acceleration sensor 243 may sense information regarding a moving speed of the remote control device 200. Meanwhile, the remote control device 200 may further include a distance measurement sensor and may sense a distance to the display 180 of the display device 100.

The output unit 250 may output a video signal or an audio signal corresponding to an operation of the user input unit 230 or corresponding to a signal transmitted from the display device 100. Through the output unit 250, a user may recognize whether the user input unit 230 has been operated or whether the display device 100 has been controlled.

For example, the output unit 250 may include an LED module 251 that is illuminated when the user input unit 230 is operated or when signals are transmitted and received with the display device 100 through the wireless communication unit 220, a vibration module 253 generating vibration, a sound output module 255 outputting sound, or a display module 257 outputting an image.

Further, the power supply unit 260 supplies power to the remote control device 200, and may reduce power waste by stopping power supply when the remote control device 200 does not move for a predetermined period of time. The power supply unit 260 may resume power supply when a predetermined key provided in the remote control device 200 is operated.

The memory 270 may store various types of programs, application data, and the like necessary for control or operation of the remote control device 200. When the remote control device 200 transmits and receives signals wirelessly with the display device 100 through the RF module 221, the remote control device 200 and the display device 100 transmit and receive signals through a predetermined frequency band.

The controller 280 of the remote control device 200 may store and refer to information regarding a frequency band through which signals can be wirelessly transmitted and received with the display device 100 paired with the remote control device 200 in the memory 270.

The controller 280 controls overall matters related to control of the remote control device 200. The controller 280 may transmit, through the wireless communication unit 220, a signal corresponding to an operation of a predetermined key of the user input unit 230 or a signal corresponding to movement of the remote control device 200 sensed by the sensor unit 240 to the display device 100.

Further, the voice acquisition module 290 of the remote control device 200 may obtain voice.

The voice acquisition module 290 may include at least one microphone 291 and may obtain voice through the microphone 291.

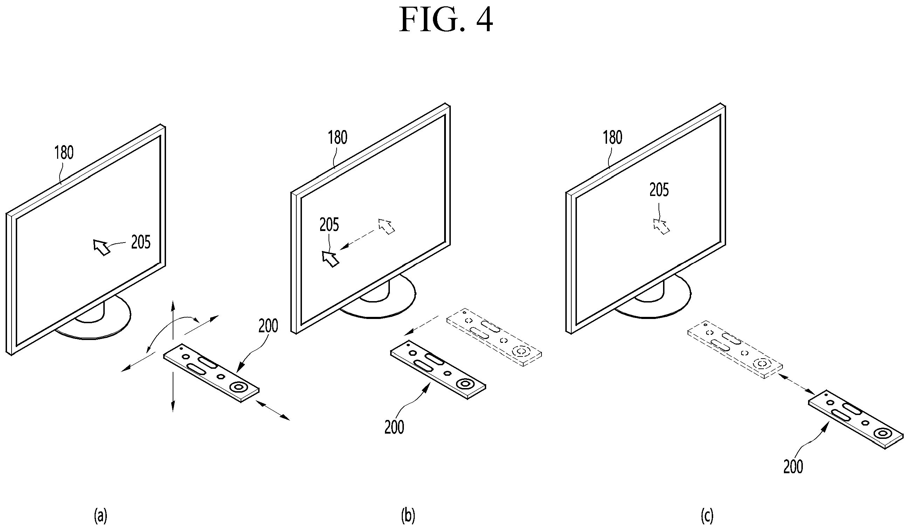

Next, FIG. 4 will be described.

FIG. 4 illustrates an example of utilizing a remote control device according to an embodiment of the present disclosure.

(a) of FIG. 4 illustrates that a pointer 205 corresponding to the remote control device 200 is displayed on the display 180.

A user may move or rotate the remote control device 200 upward, downward, leftward, or rightward.

The pointer 205 displayed on the display 180 of the display device 100 corresponds to movement of the remote control device 200. As illustrated in the drawing, since the pointer 205 is displayed while moving according to movement in a three-dimensional (3D) space, the remote control device 200 may be referred to as a spatial remote controller.

(b) of FIG. 4 illustrates that when a user moves the remote control device 200 to the left, the pointer 205 displayed on the display 180 of the display device 100 also moves to the left correspondingly.

Information regarding movement of the remote control device 200 detected through a sensor of the remote control device 200 is transmitted to the display device 100. The display device 100 may calculate coordinates of the pointer 205 based on the information regarding movement of the remote control device 200. The display device 100 may display the pointer 205 corresponding to the calculated coordinates.

(c) of FIG. 4 illustrates a case in which a user moves the remote control device 200 away from the display 180 while pressing a specific button of the remote control device 200. Accordingly, a selected area within the display 180 corresponding to the pointer 205 may be zoomed in and displayed in an enlarged manner.

Conversely, when the user moves the remote control device 200 closer to the display 180, the selected area within the display 180 corresponding to the pointer 205 may be zoomed out and displayed in a reduced manner.

Alternatively, when the remote control device 200 moves away from the display 180, the selected area may be zoomed out, and when the remote control device 200 moves closer to the display 180, the selected area may be zoomed in.

In addition, while a specific button of the remote control device 200 is being pressed, recognition of upward, downward, leftward, and rightward movement may be excluded. That is, when the remote control device 200 is moved away from or closer to the display 180, upward, downward, leftward, and rightward movement may not be recognized, and only forward and backward movement may be recognized. When the specific button of the remote control device 200 is not pressed, only the pointer 205 moves according to upward, downward, leftward, and rightward movement of the remote control device 200.

Meanwhile, a moving speed or moving direction of the pointer 205 may correspond to a moving speed or moving direction of the remote control device 200.

Meanwhile, the term "pointer" in the present specification refers to an object displayed on the display 180 corresponding to an operation of the remote control device 200. Accordingly, in addition to the arrow shape illustrated in the drawings, the pointer 205 may have various forms. For example, the pointer 205 may include a dot, a cursor, a prompt, a thick outline, and the like. Further, the pointer 205 may be displayed corresponding not only to a single point on a horizontal axis or a vertical axis of the display 180, but also to a plurality of points such as a line or a surface.

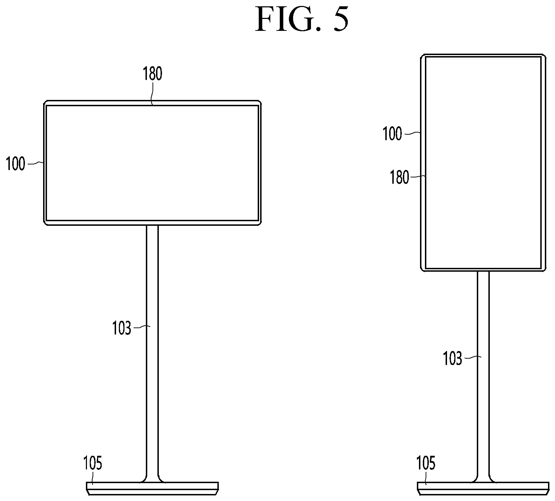

(a) and (b) of FIG. 5 are diagrams for explaining a landscape mode and a portrait mode of a stand-type display device according to an embodiment of the present disclosure.

Referring to (a) and (b) of FIG. 5, a stand-type display device 100 is illustrated.

A shaft 103 and a stand base 105 may be connected to the display device 100.

The shaft 103 may connect the display device 100 and the stand base 105. The shaft 103 may extend vertically.

A lower end of the shaft 103 may be connected to an edge portion of the stand base 105.

The lower end of the shaft 103 may be rotatably connected to a peripheral portion of the stand base 105.

The display device 100 and the shaft 103 may rotate about a vertical axis with respect to the stand base 105.

An upper portion of the shaft 103 may be connected to a rear surface of the display device 100.

The stand base 105 may support the display device 100.

The display device 100 may be configured to include the shaft 103 and the stand base 105.

The display device 100 may rotate about a point at which the upper portion of the shaft 103 contacts the rear surface of the display 180.

(a) of FIG. 5 illustrates operation in a landscape mode in which a horizontal length of the display 180 is greater than a vertical length thereof, and (b) of FIG. 5 illustrates operation in a portrait mode in which a vertical length of the display 180 is greater than a horizontal length thereof.

A user may move the stand-type display device 100. That is, unlike a fixed device, the stand-type display device 100 has improved mobility, and thus the user is not restricted by an installation location.

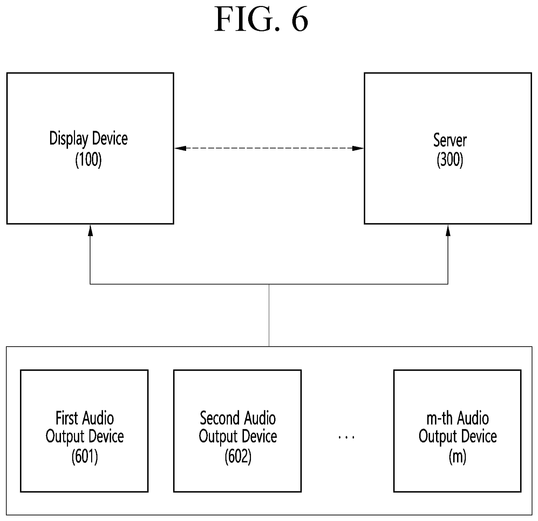

FIG. 6 is a schematic diagram of an audio processing system according to an embodiment of the present disclosure.

Referring to FIG. 6, the audio processing system may include a display device 100 and m (where m is a natural number) audio output devices 601 to m.

The m audio output devices 601 to m may be directly paired and connected with the display device 100.

Meanwhile, at least one of the m audio output devices 601 to m may be paired and connected with the display device 100 through a server 300.

Pairing and connection between the display device 100 and the audio output devices 601 to m may be performed through, for example, BLE among the communication methods described above, but the present disclosure is not limited thereto.

Although not illustrated, the audio processing system may further include the remote control device 200 illustrated in FIGS. 2 and 3 and interoperating with the display device 100, a dedicated remote control device (not shown) for each audio output device, and the like.

The display device 100 may provide an image (e.g., content or an application execution screen) through a screen and may provide audio corresponding to the image through at least one of the above-described m audio output devices 601 to m.

Conventionally, audio has generally been provided through an audio output device (e.g., a speaker) built into the display device 100. However, recently, use of external audio output devices, such as speakers and headsets connectable to the display device 100, has rapidly increased. As interest in audio has rapidly increased and attempts have been made to enjoy high-quality sound, demand for audio output devices has increased, and various audio models are being used.

The present disclosure particularly relates to a display device 100 and an operational method thereof that respond to an additional connection request of another audio output device in a situation in which at least one audio output device is already connected to and being used with the display device 100.

Hereinafter, for convenience of description, only two audio output devices will be described as an example, but the present disclosure is not limited thereto. As described above, m audio output devices may be connected to the display device 100. In this case, the m audio output devices preferably belong to the same network as the display device 100.

An operation of the display device 100 according to the present disclosure may be determined or varied according to a model (or kind or type) of an additionally requested audio output device.

In other words, the display device 100 according to the present disclosure may operate differently depending on whether an audio output device already connected to the display device 100 (hereinafter, a "first audio output device") and an audio output device additionally requesting connection to the display device 100 (hereinafter, a "second audio output device") are same models or different models.

First, an example of an operation in which the display device 100 controls a volume of an audio output device will be described as follows.

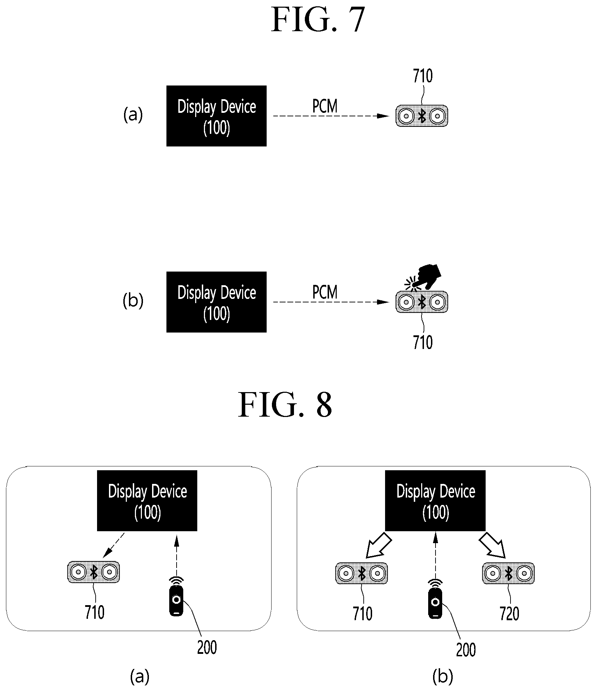

FIGS. 7 to 9 are diagrams illustrating methods of controlling a volume of an audio output device.

Here, a method of adjusting and controlling a volume of the audio output device 710 may indicate, for example, that the display device 100 adjusts and controls the volume of the audio output device 710.

Such a volume control method may include a method of adjusting a Pulse-Code Modulation (PCM) level as illustrated in (a) of FIG. 7 and a method of controlling a device volume itself as illustrated in (b) of FIG. 7.

Referring to (a) of FIG. 7, the display device 100 may adjust a PCM gain according to a volume value and transmit a PCM signal to the audio output device 710. Accordingly, a volume, that is, a sound level, of the audio output device 710 may be adjusted.

Referring to (b) of FIG. 7, the display device 100 may transmit, as a PCM signal, a command corresponding to a volume value to be adjusted to the audio output device 710, thereby adjusting the sound level. In this case, a user may directly adjust the sound level through a button provided on the audio output device 710.

Meanwhile, in the case of (b) of FIG. 7, unlike (a) of FIG. 7, the PCM gain may not be adjusted (i.e., may be fixed).

In addition, the command in (b) of FIG. 7 may be, for example, an Advanced Audio/Video Remote Control Profile (AVRCP) command, but is not limited thereto.

(a) of FIG. 8 illustrates a volume control method when only one audio output device is connected to the display device 100, and (b) of FIG. 8 illustrates a volume control method when two audio output devices are connected to the display device 100.

Referring to (a) of FIG. 8, when a user requests a volume change to the display device 100 through the remote control device 200, the display device 100 may request a volume change to the connected audio output device 710.

In this case, signals may be transmitted and received between the display device 100 and the remote control device 200 through IR or RF. In contrast, the above-described AVRCP method may be applied between the display device 100 and the audio output device 710.

Referring to (b) of FIG. 8, when a user requests a volume change to the display device 100 through the remote control device 200, the display device 100 may request a volume change to the connected audio output devices 710 and 720. In this case, the volume change request by the display device 100 may be performed, for example, by changing a size of audio data and transmitting the changed audio data.

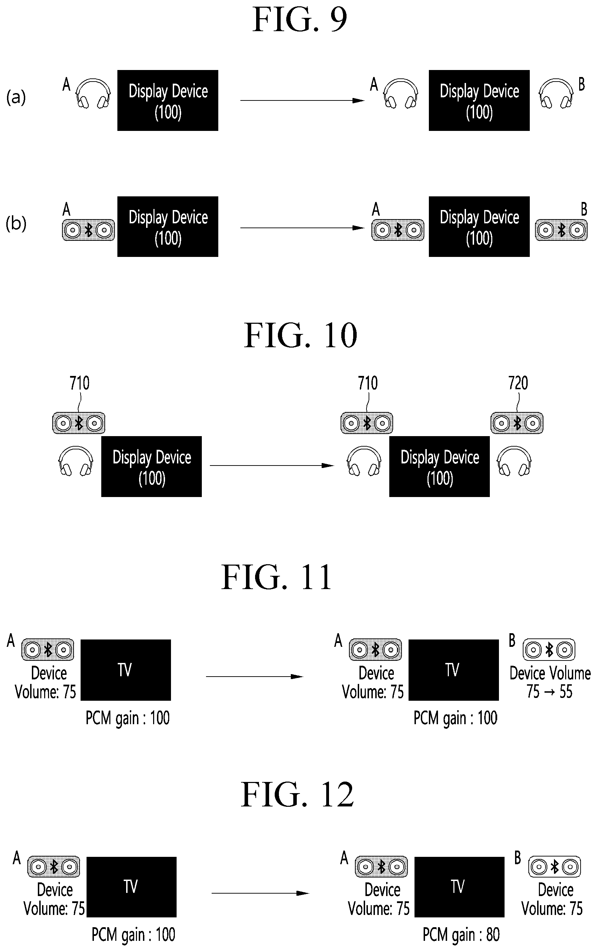

Referring to (a) of FIG. 9, while only one audio output device (Headset A) is connected to the display device 100, another audio output device (Headset B) may be additionally connected to the display device 100.

When only one audio output device (Headset A) is originally connected to the display device 100, if there is a volume change request, a device volume change may be performed through AVRCP. In this case, the PCM gain may be, for example, 100.

However, when an additional audio output device (Headset B) is connected to the display device 100 and there is a volume change request, volume levels of the respective audio output devices 710 and 720 may become different.

For example, a first audio output device (Headset A) may originally have a volume value of 30 and a PCM gain of 100. However, when a second audio output device (Headset B) is additionally connected to the display device 100, a volume value thereof may be set to 75 (default), and a PCM gain thereof may be set to 10 (default).

In other words, although the first audio output device (Headset A) has already been connected to the display device 100 and its volume has already been set, its volume setting may be changed merely because the second audio output device (Headset B) is additionally connected to the display device 100. As a result, a user of the first audio output device (Headset A) may experience inconvenience due to an unintended volume change. Likewise, the second audio output device (Headset B) may also be changed to a default setting regardless of its own setting value.

Such a situation may occur, for example, when an audio output device (Headset B) additionally connected to the display device 100 has a predetermined relationship with an already connected audio output device (Headset A), as illustrated in (a) of FIG. 9. Here, the predetermined relationship may indicate, for example, whether they are same models.

In other words, when the audio output device (Headset B) additionally connected to the display device 100 is a same model to the already connected audio output device (Headset A), outputs of the respective audio output devices (Headset A, Headset B) may be changed after the additional connection, resulting in an undesirable outcome for both devices.

Meanwhile, if the audio output devices (Headset A, Headset B) illustrated in (a) of FIG. 9 are headsets, respectively, the audio output devices (Speaker A, Speaker B) illustrated in (b) of FIG. 9 may be speakers. Accordingly, the description provided with respect to (a) of FIG. 9 may be applied or analogously applied to (b) of FIG. 9.

However, in a state in which one audio output device, that is, a first audio output device, is already connected to the display device 100, when an audio output device of a same model, that is, a second audio output device, is connected to the display device 100, volume values of the first audio output device and the second audio output device may become different from each other after the connection. This may particularly cause inconvenience to a user of the first audio output device due to unintended volume control.

In connection with the present disclosure, a method of determining whether devices are same models may include, for example, identifying whether the devices are same models based on a headset/speaker name recognized during a Bluetooth (BT) search.

In the present disclosure, for example, when a volume value is changed, a PCM gain may be controlled such that the change is simultaneously applied to both devices. For example, from a perspective of the first audio output device, a PCM gain of 100 and a volume value of 30 may be changed to a PCM gain of 10 and a volume value of 75. This is intended to prevent a situation in which a volume of the first audio output device is changed due to an additional connection of the second audio output device.

Meanwhile, use of the PCM gain in the present disclosure is intended to enable simultaneous volume control of even an additionally connected Second audio output device through a single remote control device 200, for example, when the first audio output device supports AVRCP but the second audio output device does not support AVRCP. In addition, when desired sound levels are different, individual headset/speaker volumes may be changed independently.

FIGS. 10 to 12 are diagrams illustrating an operational method of a display device connected to audio output devices according to an embodiment of the present disclosure.

FIG. 10 illustrates a case in which a second audio output device 720 that is a same model to a first audio output device 710 is additionally connected to the display device 100, and FIGS. 11 and 12 illustrate cases in which a second audio output device 720 of a different model is additionally connected.

First, referring to FIG. 10, a second audio output device 720, which is a headset/speaker of the same model as the headset/speaker first audio output device 710 connected to the display device 100, is additionally connected.

In this case, when there is a volume change request, the display device 100 may change volumes of the devices through AVRCP, that is, may control a device volume of the additionally connected second audio output device 720 to be changed such that the device volume thereof is identical to a volume value of the previously connected first audio output device 710. At this time, a PCM gain value may maintain a PCM gain of the first audio output device 710. In other words, when an audio output device of a same model is additionally connected, the PCM gain may be maintained, and a volume value of the previously connected audio output device may be inherited by a volume value of the additionally connected audio output device.

Next, FIGS. 11 and 12 illustrate cases in which speakers of different models are additionally connected to the display device 100 as audio output devices. In this case, the display device 100 may differently control the additionally connected audio output device in FIGS. 11 and 12.

First, when a speaker of a different model is connected, a volume setting value or a PCM gain value may be changed. For example, when two audio output devices are different devices, output characteristics thereof may be different, and thus sound levels may be different even though the same volume setting is applied. Alternatively, in such a case, a volume curve of an audio output device may not be linear, making it difficult to arbitrarily match volume levels.

Accordingly, in the present disclosure, a device volume value is adjusted to match outputs of the respective audio output devices.

To this end, the display device 100 may measure, for example, a volume table of a connected device, that is, the second audio output device. For example, by applying a sine wave corresponding to 1 kHz (input sensitivity: -20 dB), a voltage value may be measured through a microphone provided in the display device 100 or the like for each volume level of the second audio output device. At this time, based on a voltage corresponding to a maximum volume value (Max Vol), a relative dB value may be measured through Equation 1 below.

For example, 1 Vrms may be measured for the first audio output device and 2 Vrms may be measured for the second audio output device (at the same volume level). [Equation 1] ${L}_{dB} = 20 {log}_{10} \frac{vo}{vi}$

According to another embodiment, an output level of each audio output device in a default setting state may be measured through a microphone provided in the display device 100 (measured as a voltage value, Vrms). In this case, by applying a sine wave signal corresponding to 1 kHz, a voltage value may be measured through the microphone provided in the display device 100 for each volume level of the respective audio output devices. Thereafter, the measured voltage value may be converted into a dB value through Equation 1 described above, and a volume value corresponding to the converted dB value may be identified through the above-described table, thereby setting a final volume value.

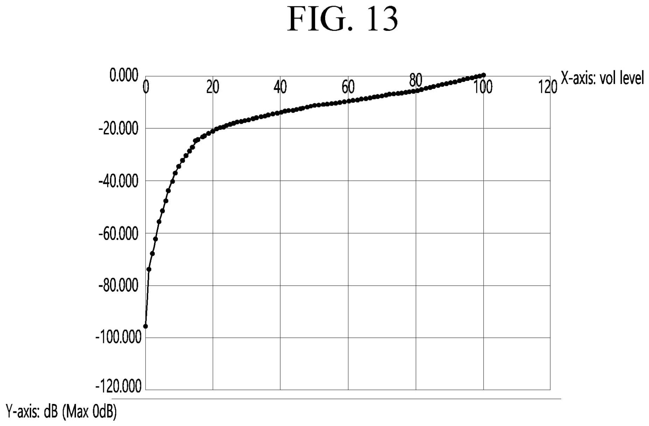

In this regard, FIG. 13 illustrates a relationship curve between a volume value and dB. In this case, an x-axis may represent a volume level, and a y-axis may represent dB (Max 0 dB).

Referring to FIG. 11, a 20 W speaker (first audio output device) having a device volume of 75 is already connected to the display device 100, and a 40 W speaker (second audio output device) is additionally connected.

In this case, as described above with reference to FIG. 10, the display device 100 may control a volume value of the additionally connected speaker to correspond to a volume value of the previously connected speaker. However, unlike FIG. 10, in FIG. 11, since a speaker of a different model (e.g., a 40 W speaker) rather than a same model (i.e., a 20 W speaker) is connected, output corresponding to the same volume value may be different. Accordingly, although the volume value of the previously connected speaker is 75, the additionally connected speaker of the different model may be controlled to have a different volume value (e.g., 55) rather than 75. In this case, the PCM gain may be maintained as described above with reference to FIG. 10.

Meanwhile, when the models are different, a volume value to which the additionally connected speaker is to be changed and controlled may be easily applied by calling a value that has been previously stored in a database.

Meanwhile, unlike the foregoing description, outputs of the respective audio output devices may be matched by adjusting a PCM gain.

For example, an output level of each audio output device in a default setting state may be measured through a microphone provided in the display device 100 (measured as a voltage value, Vrms). As described above, by applying a sine wave signal corresponding to 1 kHz, a voltage value may be measured through the microphone provided in the display device 100 for each volume level of the respective audio output devices.

As described above, when 1 Vrms is measured for the first audio output device and 2 Vrms is measured for the second audio output device (at the same volume level), Equation 1 may be used. That is, 20 * log(2/1) may be calculated to be approximately 6 dB. Accordingly, when a PCM gain value corresponding to a value reduced by the measured 6 dB is set, the respective audio output devices may have substantially similar outputs.

In FIG. 12, under the same conditions as FIG. 11, a device volume of the additionally connected speaker is also controlled to be changed to 75. However, in this case, since outputs differ according to the models, outputs of the two speakers may be different even though the same volume value is applied. To compensate for this difference, the PCM gain may be adjusted in FIG. 12. For example, when a PCM gain is 100 in a case where one speaker is connected, the PCM gain may be adjusted according to an additionally connected model. Such adjustment may be made to a smaller PCM gain when an output power of the additionally connected speaker is higher than an output power of the previously connected speaker (for example, the PCM gain may be adjusted from 100 to 80).

Likewise, by previously learning and storing, in a database, PCM gain values to be adjusted according to output power, an appropriate PCM gain adjustment value corresponding to an additionally requested model may be called and applied, thereby easily responding to an additional connection request of at least one audio output device.

Meanwhile, FIGS. 11 and 12 both illustrate cases in which an audio output device of a different model is additionally requested to be connected. Whether processing is performed as illustrated in FIG. 11 or as illustrated in FIG. 12 may be determined by the display device 100. For example, when a difference in output power between the first audio output device and the second audio output device is less than a threshold value, only a device volume may be changed without changing the PCM gain. When the difference is equal to or greater than the threshold value, the PCM gain may be adjusted without changing the device volume. In another embodiment, the opposite approach may be employed.

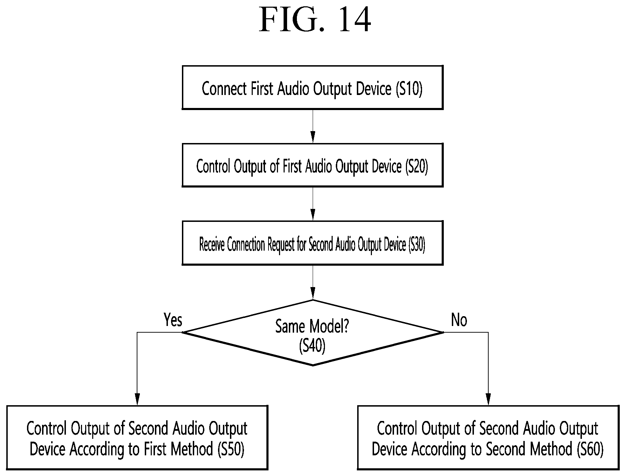

FIG. 14 is a flowchart illustrating an operation between audio output devices and the display device 100 according to an embodiment of the present disclosure.

For convenience of description, FIG. 14 will be described based on a processor of the display device 100, but the present disclosure is not limited thereto.

The processor may connect to a first audio output device (S10).

The processor may control an output of the connected first audio output device (S20).

The processor may receive a connection request from a second audio output device (S30).

The processor may determine whether the requested second audio output device is a same model to the previously connected first audio output device (S40).

The processor may determine an output control method of the second audio output device according to a result of the determination operation of S40.

For example, when the processor determines in operation S40 that the second audio output device is a same model to the first audio output device, the processor may control an output of the second audio output device according to a first method. That is, the processor may control the volume value of the second audio output device to be set to the same value as the volume value of the first audio output device according to the first method. At this time, the processor may control the PCM gain to be maintained despite connection of the second audio output device.

When the processor determines in operation S40 that the second audio output device is not a same model to the first audio output device, the processor may determine one of a volume value control method and a PCM gain control method for the second audio output device.

For example, when the processor determines in operation S40 that the second audio output device is not a same model to the first audio output device, the processor may read a volume value corresponding to the volume value of the first audio output device from a previously stored volume table and may set the read volume value as a volume value of the second audio output device.

Alternatively, when the processor determines in operation S40 that the second audio output device is not a same model to the first audio output device, the processor may set, as a volume value of the second audio output device, the same or similar volume value as the volume value of the first audio output device. In this case, the processor may control a PCM gain when only the first audio output device is connected to be changed such that the same or similar volume value as the volume value of the first audio output device is set in the second audio output device.

Even if not specifically described, numerical values mentioned in the present disclosure are merely examples and are not limited thereto. In addition, at least some operations disclosed in the present disclosure may be performed simultaneously, may be performed in an order different from the order described above, or some operations may be omitted or added.

According to an embodiment of the present disclosure, the above-described method may be implemented as processor-readable code in a medium on which a program is recorded. Examples of a processor-readable medium include a ROM, a RAM, a CD-ROM, a magnetic tape, a floppy disk, and an optical data storage device.

In the display device described above, configurations and methods of the above-described embodiments are not necessarily applied in a limited manner. Rather, the above-described embodiments may be configured such that all or part of the respective embodiments are selectively combined to enable various modifications.

### Industrial Applicability

The present disclosure relates to a display device and an operational method thereof for controlling a plurality of audio output devices when the plurality of audio output devices are connected to a single display device. Since the present disclosure can be utilized for controlling connected audio output devices in a device to which a plurality of audio output devices are connected, the present disclosure has industrial applicability.

## Claims

1. A display device, comprising:
a memory; and
a processor configured to control an output of a second audio output device when a connection request of the second audio output device is received in a state in which a first audio output device is connected,
wherein the processor is configured to determine an output control method of the second audio output device according to whether the second audio output device is a same model to the first audio output device.

2. The display device of claim 1, wherein the processor is configured to, when the second audio output device is a same model to the first audio output device, set a volume value of the second audio output device to the same value as a volume value of the first audio output device.

3. The display device of claim 2, wherein the processor is configured to control a PCM gain to be maintained despite connection of the second audio output device.

4. The display device of claim 1, wherein the processor is configured to, when the second audio output device is not a same model to the first audio output device, determine one of a volume value control scheme of the second audio output device and a PCM gain control scheme.

5. The display device of claim 1, wherein the processor is configured to, when the second audio output device is not a same model to the first audio output device, read a volume value corresponding to a volume value of the first audio output device from a volume table previously stored in the memory and set the read volume value as a volume value of the second audio output device.

6. The display device of claim 1, wherein the processor is configured to, when the second audio output device is not a same model to the first audio output device, set the same or similar volume value as the volume value of the first audio output device as a volume value of the second audio output device.

7. The display device of claim 6, wherein the processor is configured to control a PCM gain when only the first audio output device is connected to be changed such that the same or similar volume value as the volume value of the first audio output device is set in the second audio output device.

8. A method of operating a display device, the method comprising:
connecting to a first audio output device;
controlling an output of the first audio output device;
receiving a connection request from a second audio output device; and
determining an output control method of the second audio output device according to whether the requested second audio output device is a same model to the previously connected first audio output device.

9. The method of claim 8, wherein, when the second audio output device is a same model to the first audio output device, a volume value of the second audio output device is set to the same value as a volume value of the first audio output device.

10. The method of claim 9, wherein a PCM gain is controlled to be maintained despite connection of the second audio output device.

11. The method of claim 8, wherein, when the second audio output device is not a same model to the first audio output device, the output control method is determined as one of a volume value control scheme of the second audio output device and a PCM gain control scheme.

12. The method of claim 8, wherein, when the second audio output device is not a same model to the first audio output device, a volume value corresponding to a volume value of the first audio output device is read from a previously stored volume table and is set as a volume value of the second audio output device.

13. The method of claim 8, wherein, when the second audio output device is not a same model to the first audio output device, the same or similar volume value as the volume value of the first audio output device is set as a volume value of the second audio output device.

14. The method of claim 13, wherein a PCM gain when only the first audio output device is connected is controlled to be changed such that the same or similar volume value as the volume value of the first audio output device is set in the second audio output device.
